# EUROPEAN PATENT APPLICATION

(11) **EP 2 336 985 A1**
(43) Date of publication of application: **22.06.2011**
(21) Application number: 09177848.0
(22) Date of filing: 03.12.2009
(51) Int. Cl.: G07F 7/10, G06F 21/00, G06Q 20/00

(54) **Improved authentication system**

(71) Applicant: NXP B.V., 5656 AG Eindhoven (NL)
(72) Inventor: Teuwen, Philippe, 5656 AE Eindhoven (NL); Nikov, Ventzislav, 5656 AE Eindhoven (NL)
(74) Representative: Krott, Michel

(57) **Abstract**

The invention relates to a method of authenticating a digital operation (HSH, SGN) at request of a terminal (200), wherein the authenticating is to be performed by means of an authentication system (150) comprising an authentication device (110) of a user and a device reader (100) for interfacing between a terminal (200) and the authentication device (110), wherein at least one of the device reader (100) and the authentication device (110) comprises a proxy, wherein at least one of the device reader (100) and the authentication device (110) is provided with a user interface (108, 118) comprising a display device (106, 116) and an input device (104, 114). The method comprises steps of monitoring the data comprising the digital operation, capturing the digital operation (HSH, SGN), displaying a representative of the digital operation (HSH, SGN) to the user, and requesting confirmation of the digital operation. At least part of said digital operation (HSH, SGN) is released if the user has confirmed and blocked if the user has declined. The digital operation (HSH, SGN) is performed if the user has confirmed said digital operation (HSH, SGN). The invention further provides an authentication system for carrying out such method. The invention also relates to a device reader and to an authentication device for use in such system. The invention provides a method of authenticating a digital operation, which is user friendly, while still providing high security by ensuring that the user knows what he is signing, and while better protecting the user's privacy.

## Description

### FIELD OF THE INVENTION

The invention relates to a method of authenticating a digital operation at request of a terminal. The invention further relates to a computer program product comprising instructions for causing a processor to perform such method and to an authentication system for carrying out such method. The invention also relates to a device reader and to an authentication device for use in such system.

### BACKGROUND OF THE INVENTION

Online banking has become very popular these days. The question remains whether it is secure enough. Banks are in a continuous process of improving the security of the system, but nevertheless the hackers and criminals always seem to succeed in misleading the users to perform transfer to their accounts. Several products such as ZTIC™ (IBM), DigipaSS™ (Vasco), and Emue ™, are available on the market. A few of those products are discussed below.

The ZTIC™ device is a USB-attached device containing a display and minimal l/O capabilities that runs the full TLS/SSL protocol. Thus, this authentication system is entirely bypassing the PC's software for all security functionality. All critical transaction information, such as target account numbers, is automatically forwarded in the data stream between browser and ZTIC™ device. This critical information is then displayed on the ZTIC™ device for explicit user confirmation: Only after pressing the "OK" button does the TLS/SSL connection continue. If any malware on the PC has inserted incorrect transaction data into the browser, it can be easily detected by the user at this moment. Drawbacks of IBM's solution are: HTTP/TLS is supported in the device so this makes it more expensive and more vulnerable (at least because of the higher complexity) than the other products. In addition, the IBM solution requires a second device next to a bank card.

Banks (e.g. Fortis, Dexia, etc.) are using DigipaSS™ (no card needed) or a card reader (e.g. C-Zam™) with the bank card. The DigipaSS™ and the card reader may or may not be directly connected to the user's PC, if they are not connected then the user has to type some numbers in order to transfer the data between them.

Online banking is carried out in different ways. There are two different cases where it is required to sign in online banking with a PC.

The first step is always that the user has to authenticate to the bank. In the PC the internet browser establishes a secure channel (e.g. TLS, SSL) to a bank server by verifying the bank certificate and using the Digipass™ to provide user's authentication.

The second step is transaction authentication, which may be done several times in one online banking session (for each transaction or group of transactions).

It must be noted that some banks do not use transaction authentication. In such scenario any Trojan can play man-in-the-middle (or man-in-the-browser) to transfer money to secret accounts, while staying completely invisible for the user. An example of such Trojan is called "Silent banker". It is known that the ability of this Trojan to perform man-in-the-middle attacks on valid transactions is what is most worrying. The Trojan can intercept transactions that require two-factor authentication. It can then silently change the user-entered destination bank account details to the attacker's account details instead.

Banks put a lot of effort in educating their clients such that the risk of being attacked is reduced. For example, it should be known to everyone that in general the bank never asks to log on with a transaction signature or to sign a transfer with an authentication signature. Usually on the bank readers there are two buttons both referring to digital signatures, but with a different meaning. One is used (or should be) only for initial authentication and labeled l or M1 and the other to authorize actions e.g. transactions and labeled S or M2. So it is expected that the user shouldn't be fooled to use them in another way.

Furthermore, the banks also give the following advises:
- "Make sure you know what you are signing."
- "Only sign what you have asked for."
- "Do not sign if you have not asked for anything."

Nevertheless, in the recent case the Trojan asked for an "additional security check" during a transaction and many users believed that it was a request from the bank. They actually signed a transfer to the Trojan's bank account.

It must be noted that, despite all measures taken, there can be situations where the user doesn't have to sign a transfer. For example in case of transfers carried out between accounts managed in the user's PC banking agreement, or when the beneficiary's account is already included in the user's list of saved beneficiaries. It must be noted that the above situations implies that the list of saved beneficiaries should be well protected, otherwise the Trojan will simply change the account number in the list (not the corresponding name) and the user most probably will not detect the change.

In addition the user should normally sign any (not only local) but European or international transfers in the same way, but then an international bank account number (IBAN) has to be provided next to the beneficiary's account. The limitation of 12 digits on today's DigipaSS™ display could lead to cumbersome situations where the user signs only part of the IBAN. It must be noted that also that the length of the bank account numbers is different in the different countries, for example the longest IBAN is for Malta and contains 31 digits.

Another domain of applications: Electronic identifier cards (elD's), such as the ones introduced in Belgium, are capable of signing data, even making legal signatures equivalent to hand-written signatures.

A problem of the above-mentioned known authentication systems is that they suffer from a persistent trade-off between high security and user-friendliness, i.e. either the systems are providing high-security and are not user friendly, or they are user friendly, but contain many vulnerabilities which hackers may easily exploit. In other words such systems do not comply with the paradigm "Make sure that you know what you are signing". Another problem of the known authentication systems is that the privacy of the user is not protected well enough. Hackers may easily obtain information about the user via the authentication system, such as personal information being stored on the card, without his or her consent.

### SUMMARY OF THE INVENTION

It is a first object of the invention to provide a method of authenticating a digital operation, which is user friendly, while still providing high security by ensuring that the user knows what he is signing, and while better protecting the user's privacy. It is a second object of the invention to provide an authentication system for carrying out such method.

The invention is defined by the independent claims. The dependent claims define advantageous embodiments.

In a first aspect, in accordance with the first object, the invention relates to a method as claimed in claim 1.

The effect of the features of the invention is as follows. In a system for authenticating a digital operation there is a terminal, such as a PC, which runs a certain application requiring authentication. The terminal has to communicate with an authentication device through a device reader designed for that purpose. Either the reader device or the authentication device are provided with a user interface (possible external) comprising display for displaying a representative of the digital operation and an input device for providing confirmation or declination of the digital operation. A first important step of the method is that all data between the terminal and the authentication device is monitored. Within this data there is the digital operation to be confirmed. A second step is the capturing of the digital operation. A third step is the displaying of a representative (message) of the digital operation on the display device, which may be the full digital operation itself in a human readable representation if it fits on the display. A fourth step is the request for confirmation from the user through the input device. The input of the user is verified in the fifth step. If the user confirms the digital operation it is released and allowed to proceed and if the user declines the digital operation it is blocked and not allowed to proceed. In the sixth step the digital operation is carried out. The sequence of steps above enables the user to verify what he is signing/authenticating/allowing. Also, the way the authentication is carried out is very user friendly. All the user needs is to look at the display and use the input device for confirming or declining (such input device may comprise a "Yes" and "No" button, for example).

The first, second, and fifth step are of such kind that they may be conveniently carried out by a proxy (which may be located in the device reader and/or the authentication device), whereas the third and fourth step may be controlled/triggered by the same proxy. It is not essential that it is a real proxy as long as the functionality provided complies with the method of the invention. In the invention as claimed the term proxy is used but must be interpreted as the functionality as mentioned in the claims.

In view of the above it must be noted that the inventors have realized that the paradigm "Make sure you know what you are signing" implies "Sign only what you see" which is the case in some systems, but they have also realized that it also implies that what the user sees must be verifiable. For example some banks require the user to sign the beneficiary's account (as is) while other banks require the user to sign a number (computed somehow from the beneficiary's account and displayed on the browser). Obviously, the second approach is not fulfilling the requirement "Make sure you know what you are signing" since the user is unable to verify whether the displayed number corresponds to the beneficiary's or to the Trojan's account. The invention provides a possibility of verifying what needs to be authenticated as the user is presented with the digital operation and asked for confirmation.

In many prior art solutions everything relies only on the PC application and driver. An additional problem is that in the prior art there is no authentication from the card to extract the personal data of the user from a PC application, either legitimate or malicious. Also here everything relies on the PC application and driver as such a malware could easily aggregate those personal data in a completely automatic way. The invention provides for a possibility to block personal data to be extracted from the card in case of malicious request, as the user is presented with such request and asked for confirmation.

An embodiment of the method in accordance with the invention further comprises:
- sending an error message back to the terminal if the user has declined said digital operation. The advantage of providing a signal to the terminal that the digital operation has been declined is that the method is more user-friendly. Such error message may be presented to the user on the terminal to confirm that the digital operation has been declined, but it may also be used to trigger further actions on the terminal. To act transparently towards existing terminals unaware of the invention, the error message can be one of the standardized error messages returned by a smartcard.

In an embodiment of the method in accordance with the invention the authentication system further comprises a local storage (DB), and wherein the digital operation comprises a command and an input part, wherein the input part of the digital operation and a result of the digital operation are stored in the local storage (DB) for further confirmation at a later stage. In particular in E-banking applications there exist different digital operations to be carried out by the respective authentication device. The most important ones are the "sign" and the "hash" commands. For the latter it is advantageous if the hash result is stored, such that it may be signed at a later stage. When the sign command is given the input part of the command may be compared with the result stored in the local storage, which may be used as an additional protection level, which is rendered possible in this embodiment of the invention.

An embodiment of the method in accordance with the invention further comprises:
- monitoring further data between the authentication device and the terminal;
- capturing the further digital operation, the further digital operation comprising a further command and a further input part;
- verifying if the further input part complies with the input part or the result in the local storage (DB);
- displaying a representative of the input part on the display device if the further input part complies with the input part or the result in the local storage (DB), or displaying a warning message if the further input part differs from the input part and the result;
- requesting confirmation of the further digital operation from the user, wherein the confirmation is done through the input device;
- releasing at least part of said further digital operation if the user has confirmed said further digital operation and blocking at least part of said further digital operation if the user has declined said further digital operation, and
- performing the further digital operation by the authentication system if the user has confirmed said further digital operation.

The steps set out above form a convenient way of implementing the functionality discussed in the previous embodiment.

In an embodiment of the method in accordance with the invention the authentication device comprises a bankcard for authenticating transactions. In such embodiment the digital operation is selected from a group comprising: a hash operation, a sign operation, and an application access request command.

In an embodiment of the method in accordance with the invention the authentication device comprises an electronic identity card (elD) comprising personal information of the user. Such electronic identity cards are being used in Belgium for example. At this moment such card is a contact device, but it may also be modified such that it uses RFID technology in the future, such as the latest versions of the electronic passport.

In an embodiment of the method in accordance with the invention the digital operation is selected from a group comprising: a request for transmitting at least part of the personal information. Such digital operation may be requested in the field of electronic identify cards, for example. The invention is particularly advantageous in such scenario as the user will always be asked if he agrees with releasing at least part of the personal information.

In an embodiment of the method in accordance with the invention the authentication device is a multi-application card comprising a plurality of applications, such as a medical application, an electronic ID application, a library card application, and an access card application. It is to be expected that personal cards will be used for more than one application in the near future, which saves a lot of cards to be carried along by the user. The more applications are put on a personal card, the more important safety and privacy become. Such trend makes the advantages of the invention even more pronounced.

In an embodiment of the method in accordance with the invention the digital operation is selected from a group comprising: a request for a list of supported applications. Furthermore, in this embodiment, upon receiving the request for a list of supported applications, confirmation is requested for each respective one of the supported applications, and in the performing of the digital operation, each respective declined application is not exposed to the terminal. In multi-application cards it may be desirable to hide applications to the reader device which are not relevant to be disclosed in the situation, i.e. the privacy of the user has to be safeguarded. This embodiment provides for the option of confirming for each application separately if it may be disclosed to the reader device which requests for the application list. It may be done every time the request is done again, or it may be done once whereafter its result is stored. Applications to be not disclosed may be removed from the card answer or masked with a dummy value.

In a second aspect, the invention relates to a computer program product comprising instructions for causing a processor to perform the method in accordance with the invention. The method may be conveniently implemented in software that is run on a piece of hardware. Alternatively, it may be implemented in hardware or a mixture of hardware and software. Such decision is up to the designer and depends on the desired flexibility of the authentication method and system.

In a third aspect, in accordance with the second object, the invention relates to an authentication system for carrying out the method in accordance with the invention. The method may be implemented in an authentication system in many different ways. All such authentication systems fall within the scope of the invention as claimed.

In a fourth aspect, in accordance with the second object, the invention relates to an authentication system for authenticating a digital operation at request of a terminal. The authentication system comprises an authentication device of a user and a device reader for interfacing between a terminal and the authentication device, wherein at least one of the device reader and the authentication device comprises a proxy for monitoring data transmitted between the authentication device and the terminal. The data comprises the digital operation to be confirmed. The proxy is further configured for capturing the digital operation. At least one of the device reader and the authentication device is provided with a user interface comprising the display device and an input device, wherein the display device is configured for displaying a representative of the digital operation to the user on the display device. The proxy is further configured for requesting confirmation of the digital operation from the user through the input device, and for releasing at least part of said digital operation if the user has confirmed said digital operation and for blocking at least part of said digital operation if the user has declined said digital operation. Finally, the authentication system is configured for performing the digital operation if the user has confirmed said digital operation. This embodiment of the authentication system is a convenient implementation for carrying out the method, but the invention is not restricted to such embodiment.

In an embodiment of the authentication system in accordance with the invention the authentication device comprises the user interface. The invention may be conveniently implemented in authentication device which comprise a user interface including the display device and the input device. Authentication cards having display devices and user interfaces have been disclosed in the prior art. What is important in the invention is that the display is used to present to the user clearly what he or she is signing for. In the prior art solutions this is not the case. The display devices tend to show a series of numbers which do not give any clue to the user what he is signing for.

In an embodiment of the authentication system in accordance with the invention the device reader comprises the user interface. This embodiment forms a second option. The invention may also be applied to so-called legacy cards. In that case the device reader may be provided with the additional functionality including the user interface.

An embodiment of the authentication system in accordance with the invention a further device comprises the user interface, wherein the further device is linked with the authentication device and/or the reader device. This embodiment forms a third option. In case the reader cannot be modified there is the option of providing the user interface on a further device and link this device (such as using RFlD technology) with the authentication card. Such further device effectively operates as a "dummy" or "dumb" terminal.

Similarly to the discussion of the previous three embodiments, in a first variant, the authentication device comprises the proxy. In a second variant of the authentication system the device reader comprises the proxy. It does not matter where the proxy is implemented as long as it is configured for monitoring all data between the terminal and the authentication device.

In an embodiment of the authentication system in accordance with the invention the authentication device is selected from a group comprising: a bankcard for authenticating transactions, an electronic identity card (elD) comprising personal information of the user, and a multi-application card comprising a plurality of applications, such as a medical application, an electronic ID application, a library card application, and an access card application. As mentioned earlier, multi-application cards may benefit from the invention to a great extent.

In a fifth aspect, in accordance with the second object, the invention relates to the device reader and the authentication device for use in the authentication system of the invention. It must be stressed that a designer has a lot of freedom to put specific functions where he sees fit. Within the authentication system of the invention the designer has the option to put it in the device reader, in the authentication device, or even in an external device coupled to at least one of both. In view of this, the invention as claimed includes all such variations, including a modified reader device in accordance with the invention, and a modified authentication device in accordance with the invention. Such entities may be sold separately.

These and other aspects of the invention are apparent from and will be elucidated with reference to the embodiments described hereinafter.

### BRIEF DESCRIPTION OF THE DRAWINGS

In the drawings:
Fig. 1 shows an authentication system as known from the prior art;
Fig. 2 shows an authentication system comprising a bank card with a user interface;
Fig. 3a shows a first embodiment of an authentication system in accordance with the invention;
Fig. 3b shows some aspects of the operation of a bankcard;
Fig. 4 shows a second embodiment of an authentication system in accordance with the invention, and
Fig. 5 shows a third embodiment of an authentication system in accordance with the invention.

### List of reference numerals:

- 1: card reader of the prior art
- 2: clear key
- 3: display
- 4: numeric keys
- 5: logo
- 6: confirmation key
- 10: bankcard of the prior art
- 100: card reader of the invention
- 104: input device on card reader
- 105: proxy on card reader
- 106: display device on card reader
- 108: user interface on card reader
- 110: bankcard of the invention
- 114: input device on bank card
- 115: proxy on bank card
- 116: display device on bank card
- 118: user interface on bank card
- 150: authentication system
- 200: laptop / (web) terminal / personal computer
- 119: local storage of bankcard
- MSG: message to be hashed
- HSH: hash operation
- STR: storage operation of hashed message (and message)
- HSHM: hashed message
- SGN: sign operation
- CMPHSH: hash-compare operation
- DSPM: display-message operation
- ACFM: ask-for-confirmation operation
- SGNTR: digital signature
- 300: dumb/dummy terminal
- 304: input device of dummy terminal
- 306: display device of dummy terminal
- 308: user interface of dummy terminal
- 104': further input device on card reader
- 105: proxy on card reader
- 106': improved display device on card reader
- 109: local storage of card reader

### DETAILED DESCRIPTION OF THE PREFERRED EMBODIMENT

In the description of the figures E-banking is used as an example application of the invention. It must be stressed that this is just for illustrative purposes only. The invention is applicable to a much broader field. The total system of the invention comprises at least the following components:
1) a terminal (such as a PC or a laptop) comprising an application (such as a web-based application in a browser) that is connected to a server on a public server (such as the internet), wherein the server may be from a bank or government for example;
2) an authentication device such as a bankcard, and
3) a device reader such as a card reader.

As will be elaborated on in the description of the figures, the invention provides (secure and privacy) proxy functionality in the authentication device if it has display and buttons, and provides (secure and privacy) proxy functionality in the device reader if the authentication device has no display and buttons. In both cases the protocol between the PC (browser), the reader and the card is not changed, i.e. the proxy is transparent. The proxy guarantees that whatever the card is signing is fully displayed on a display device (which may be on the device reader and/or on the authentication device). The visualization on the display allows the user to verify the message and accept or reject it via the buttons (two Yes/No buttons may sufficient for some applications). The proxy also can grant/deny permission for the reader/PC to communicate to specific card application. Namely the request is displayed and the user accepts or rejects it.

A purpose of the invention is to provide a better combination of user friendliness and security than the prior art solutions in for instance online banking. A further purpose is to provide a means of privacy protection (e.g. for elD cards).

Embodiments of the invention aim at a new type of cards, namely those with a display and buttons. The proxy functionality guarantees that what the user is signing is what he sees and second it can be used to grant access to a (card) application or deny it. The solution is backward compatible, meaning that the proxy functionality in the new card does not require change of the existing protocol between the terminal and the card. Proxy functionalities are also proposed for legacy cards, but then this functionality has to be implemented on the reader side.

In order to facilitate the discussion of the detailed embodiments a few expressions are defined hereinafter.

Throughout this description the term "terminal" refers to an apparatus that is capable of running an application requiring authentication, such as a PC, a laptop, or a web terminal.

Throughout this description the term "authentication device" refers to a device for authenticating digital operations.

Throughout this description the term "authentication system" refers to a combination of an authentication device and a device reader for interfacing between such authentication device and the terminal.

Throughout this description the term "digital operation" refers to an operation which is carried out by the authentication system as part of an application that is run on the terminal, which needs to perform specific operations requiring authentication or it refers to a request from a terminal for personal information of the user that is stored on the authentication system.

Throughout this description the term "proxy" refers to means for carrying out the functionalities in the claims of monitoring the data, capturing the digital operation, triggering or controlling the displaying of the representative of the digital operation, triggering or controlling the requesting for confirmation, and the releasing or blocking of the digital operation.

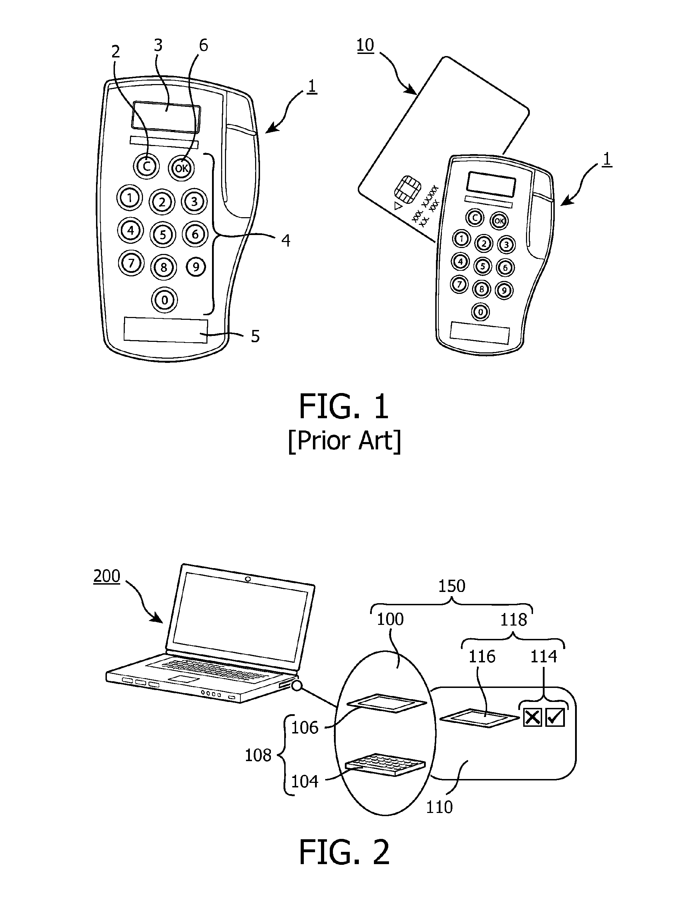

Fig. 1 shows an authentication system as known from the prior art. The authentication system comprises a bankcard 10 and a card reader 1. The card reader 1 comprises a user interface comprises a plurality of keys and a display 3. The plurality of keys comprises a clear key 2, numeric keys 4, and a confirmation key 6. The card reader 1 further comprises at its bottom side a logo 5 of the bank concerned. The authentication system of Fig. 1 is meant to be used with an internet banking application on a PC or laptop and operates as follows. The user starts the browser on the PC and logs in on the internet banking website of the bank. The browser then establishes a secure channel to the bank (using TLS or SSL for example). In this log in procedure the user first provides his bank account number and bankcard number. Then the user is presented with a login number on the screen of the PC which he has to enter into card reader (before he is allowed to enter such number the user first has to enter the PIN code of his bank card). The card reader creates an internal message composed of the login number and optionally a timestamp and/or the card reader serial number, reduces the message to a hash value and sends a command (including the PIN code) to the bankcard for performing a digital operation, being here a signature of the hash. The card reader finally presents to the user a number which is a numerical representation of (part of) the smartcard answer. The user then enters this number in the browser on the PC and the browser sends it to the remote bank website. The website verifies the authenticity of the number. When the number is valid, the user is logged into the internet banking application and may perform transaction. This process of logging in is also referred to as user authentication. For each transaction or group of transactions that the user is doing transaction authentication is required also. In the example of Fig. 1 the transaction authentication is carried out in the same way as the user authentication.

In view of the above it must be noted that the authentication system of Fig. 1 does not comply with the earlier mentioned paradigm "make sure that you know what you are signing". The authentication system of Fig. 1 only ensures that the user knows that he has confirmed a transaction, but he cannot be sure that what the real transaction is, which is carried out. As already mentioned, Trojans may easily fool the user and do other transactions than the user has confirmed.

Many institutions, such as banks and governments, have given the user a card (which already has certain security on it). Therefore, the inventors have aimed at a solution which may be embodied in a card as well. For simplicity, it is assumed in the following figures that the PC (software) is connected to a reader device with a card in it and that the browser (or application) is capable to talk (very limited language like PC/SC to the card. PC/SC stands for "Personal Computer/Smart Card") which is a specification for smart card integration in computing environment. Such basis configuration is illustrated in Fig. 2, which shows an authentication system 150 comprising a bank card with a user interface. In the figure there is shown a terminal 200 (here a laptop) which communicates with a bank card 110 via a reader device 100 (here a card reader). The card reader 100 comprises a user interface 108, which comprises an input device 104 and a display device 106. The bank card 110 comprises a further user interface 118, which comprises a further input device 114 and a further display device 116. The further input device 114 may comprise two keys or buttons, a "Yes/Confirm" and a "No/Decline" button for example. For many embodiments such input device may suffice, but the invention is not limited to such input devices per se.

Three embodiments of the authentication system of the invention are discussed hereinafter, wherein the difference between said embodiments resides in the location of the proxy for security and privacy. A legacy card operation as known from the prior art is as follows: the card can hash (digital finger printing) a message and the card can sign a short message or a hashed message (typically after entering and verification of the user's PIN code).

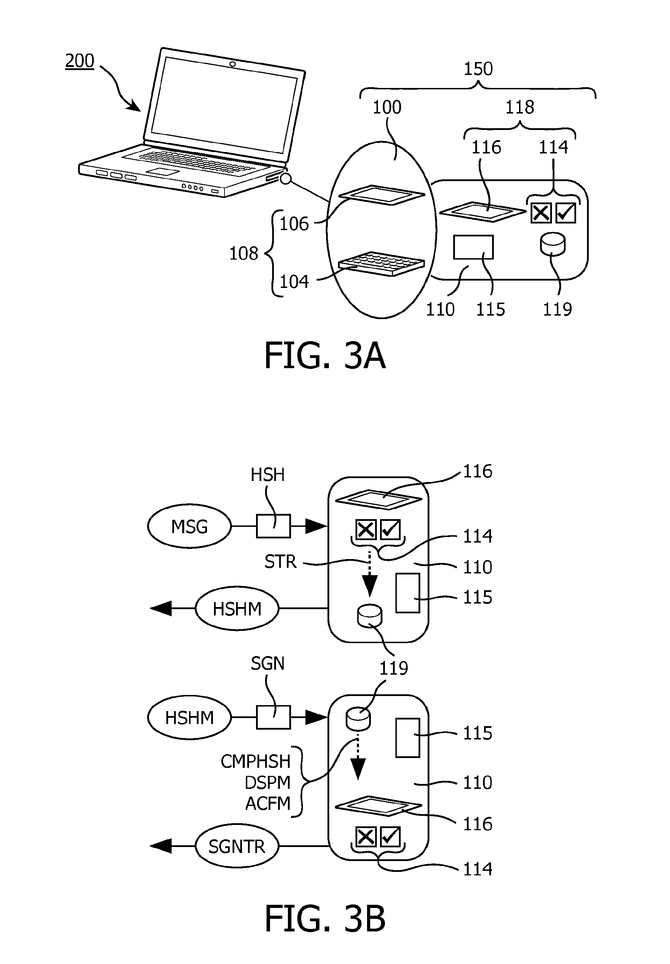

Fig. 3a shows a first embodiment of an authentication system in accordance with the invention. A proxy 115 has been implemented in the bank card 110 and is configured for monitoring the data between the card 110 and the terminal 200. When data (i.e. a digital operation to be carried out) is send to the card 110 to be signed the proxy 115 displays the data on the display device 116 and waits for confirmation by the user. The user uses the input device 114 for either confirming or declining the data. In an embodiment the display 116 is capable of showing simple ASCII string up to predefined length (preferably over 39 symbols, which complies with at least 31 symbols for the account and at least 8 symbols for the amount). The user uses the buttons of the input device 114 ("Yes"/"No") to confirm whether he accepts the message to be signed. If he confirms with pressing "Yes" and his PIN verification is ok then the actual signing is performed. The bank card 110 in Fig. 3a also comprises a local storage 119 which function is explained in the next paragraph.

Fig. 3b shows some aspects of the operation of a bankcard.

When a message MSG is send to the card 110 first to be hashed HSH (and later to be signed SGN) the proxy 115 stores STR the hashed message HSHM and the message MSG in the local storage 119. When later the sign command SGN is sent the proxy 115 verifies (compares CMPHSH) if the input HSHM to this command is what was stored in the local storage 119 then, if true, displays the original message MSG and waits ACFM for the user confirmation. If not true, the proxy displays DSPM a warning message and waits for the user confirmation ACFM. If the user confirms the usual user's PIN verification may be done and the actual signing may be performed, i.e. a signature SGNTR is send back to the terminal 200. This paragraph illustrates that the proxy design is transparent to the usual card protocol.

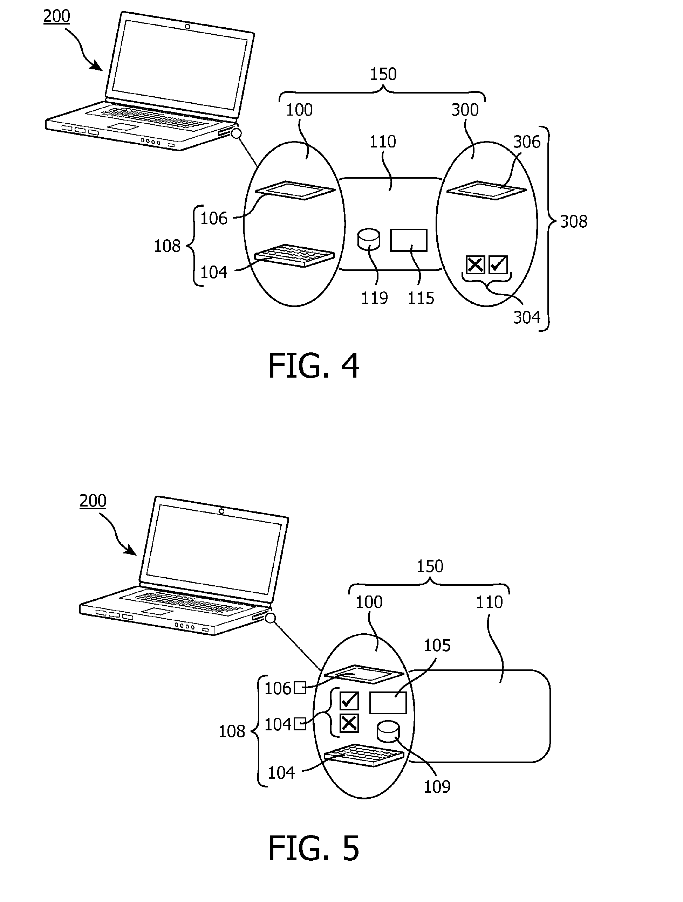

Fig. 4 shows a second embodiment of an authentication system in accordance with the invention. This embodiment will be discussed in as far as it differs from the first embodiment. In this embodiment the bank card 110 does not have a user interface. In order to implement the method and system of the invention a further device (a dumb or dummy terminal) 300 is provided. This dummy terminal 300 is linked with the bank card 110 through an interface, which may be wired or wireless. The dummy terminal 300 comprises a user interface 308, which comprises an input device 304 and a display device 306 as discussed in the previous embodiment. Effectively, the display and buttons are "outsourced" to the dummy terminal. The principle of operation is the same as in Fig. 3.

Fig. 5 shows a third embodiment of an authentication system in accordance with the invention. In this embodiment the bank card 110 may be a legacy card. In this embodiment the proxy functionalities are implemented in the reader device 100, which thereby obtains enhanced capabilities, i.e. a proxy 105, a better display 106' (as required by the card 110, i.e. not only for the PIN) and the further input device (two buttons) 104'.

In the examples of Figs 3 to 5 the proxy 105, 115 monitors only the commands sign and hash. However, the invention is not limited to E-banking and therefore the invention is also applicable to other digital operations.

The proxy 105, 115 may also monitor commands used for access to certain specific applications (which is a privacy issue). The invention provides that if such an application is called from the PC 200 then the proxy 105, 115 displays the request and waits for user confirmation. When the user confirms by "Yes" that the access is granted the proxy 105, 115 allows the command to get to the card application. The invention may be further applied in the case of an electronic identifier card (elD), wherein the proxy 105, 115 will ask user confirmation before disclosing the personal information of the holder to the PC application.

There is a trend visible towards multi-application cards. In such cards privacy is even a bigger concern. Whenever access to a certain card application is requested it may be desired that no information is disclosed with regards to other applications which are not being used. The invention not only provides for the option to present the user with such request first before access is granted, the invention also provides for the option of acknowledging per application if the presence of the application may be disclosed. Any command which lists the applications supported by the card may be changed such that the protected applications are invisible or masked, or instead of them a common "hidden application" message may be provided.

All interfaces mentioned in the description may also be implemented using RFID technology. RFID technology is being used in many different applications, such as electronic passports, contactless credit cards (E-banking), access control or public transport ticketing, contactless credit cards, and also product tagging (replacement of barcodes). In all such application the operation of the RFID transponder device is similar. With RFID is meant RFID technology in general. Many different variants and technologies exist, which are not discussed in detail in this description. More information about these technologies is to be found in books, such as the book from Dominique Paret, "RFID and Contactless Smartcard applications", Wiley, ISBN 0470011955, but also in the "RFID Handbook" of Klaus Finkenzeller, Carl Hanser Verlag München Wien, ISBN 3-446-22071-2.

The invention thus provides a method of authenticating a digital operation HSH, SGN at request of a terminal 200, wherein the authenticating is to be performed by means of an authentication system 150 comprising an authentication device 110 of a user and a device reader 100 for interfacing between a terminal 200 and the authentication device 110, wherein at least one of the device reader 100 and the authentication device 110 comprises a proxy, wherein at least one of the device reader 100 and the authentication device 110 is provided with a user interface 108, 118 comprising a display device 106, 116 and an input device 104, 114. The method comprises steps of monitoring the data comprising the digital operation, capturing the digital operation HSH, SGN, displaying a representative of the digital operation HSH, SGN to the user, and requesting confirmation of the digital operation. At least part of said digital operation HSH, SGN is released if the user has confirmed and blocked if the user has declined. The digital operation HSH, SGN is performed if the user has confirmed said digital operation HSH, SGN. The invention further provides an authentication system for carrying out such method. The invention also relates to a device reader and to an authentication device for use in such system. The invention provides a method of authenticating a digital operation, which is user friendly, while still providing high security by ensuring that the user knows what he is signing, and while better protecting the user's privacy.

The invention may be applied in various application areas. For example, the invention may be applied in E-banking, governmental identification (elD), eHealth, or any other case where a smartcard is use in conjunction with a remote webserver, through a potentially untrusted terminal, typically a PC and its browser. In the description there has been a strong focus on PC-based authentication systems. However, the invention is much wider applicable. It may be used anywhere where an untrusted terminal/reader is faced. For example, at the swimming pool one may have to put his elD in a reader to prove he's living on the same locality and the invention may make sure the swimming pool employee is not trying to collect all other private information than the locality of the user. Another example is the implementation of proof of age at a disco bar entrance using an elD. The user may decide to disclose his age only, and not any other information.

Various variations of the invention are possible and do not depart from the scope of the invention as claimed.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

## Claims

1. A method of authenticating a digital operation (HSH, SGN) at request of a terminal (200), wherein the authenticating is to be performed by means of an authentication system (150) comprising an authentication device (110) of a user and a device reader (100) for interfacing between a terminal (200) and the authentication device (110), wherein at least one of the device reader (100) and the authentication device (110) is provided with a user interface (108, 118) comprising a display device (106, 116) and an input device (104, 114), the method comprising:
- monitoring the data between the authentication device (110) and the terminal (200), wherein the data comprises the digital operation (HSH, SGN) to be confirmed;
- capturing the digital operation (HSH, SGN);
- displaying a representative of the digital operation (HSH, SGN) to the user on the display device (106, 116);
- requesting confirmation of the digital operation (HSH, SGN) from the user, wherein the confirmation is done through the input device (104, 114),
- releasing at least part of said digital operation (HSH, SGN) if the user has confirmed said digital operation (HSH, SGN) and blocking at least part of said digital operation (HSH, SGN) if the user has declined said digital operation (HSH, SGN), and
- performing the digital operation (HSH, SGN) by the authentication system (150) if the user has confirmed said digital operation (HSH, SGN).

2. The method as claimed in claim 1, further comprising:
- sending an error message back to the terminal (200) if the user has declined said digital operation (HSH, SGN).

3. The method as claimed in claim 1 or 2, wherein the authentication system (150) further comprises a local storage (DB), and wherein the digital operation (HSH, SGN) comprises a command (HSH) and an input part (MSG), wherein the input part (MSG) of the digital operation (HSH, SGN) and a result of the digital operation (HSH, SGN) are stored in the local storage (DB) for further confirmation at a later stage.

4. The method as claimed in claim 3, further comprising:
- monitoring further data between the authentication device (110) and the terminal (200);
- capturing the further digital operation (HSH, SGN), the further digital operation (HSH, SGN) comprising a further command (SGN) and a further input part (HSHM);
- verifying if the further input part (HSHM) complies with the input part (MSG) or the result in the local storage (DB);
- displaying a representative of the input part (MSG) on the display device (106, 116) if the further input part (HSHM) complies with the input part (MSG) or the result in the local storage (DB), or displaying a warning message if the further input part (HSHM) differs from the input part (MSG) and the result;
- requesting confirmation of the further digital operation (HSH, SGN) from the user, wherein the confirmation is done through the input device (104, 114);
- releasing at least part of said further digital operation (HSH, SGN) if the user has confirmed said further digital operation (HSH, SGN) and blocking at least part of said further digital operation (HSH, SGN) if the user has declined said further digital operation (HSH, SGN), and
- performing the further digital operation (HSH, SGN) by the authentication system (150) if the user has confirmed said further digital operation.

5. The method as claimed in any one of the preceding claims, wherein the authentication device (110) is a multi-application card comprising a plurality of applications, such as a medical application, an electronic ID application, a library card application, and an access card application.

6. The method as claimed in claim 5, wherein the digital operation is selected from a group comprising: a request for a list of supported applications, and wherein, upon receiving the request for a list of supported applications, confirmation is requested for each respective one of the supported applications, and wherein, in the performing of the digital operation, each respective declined application is not exposed to the terminal (200).

7. A computer program product comprising instructions for causing a processor to perform the method as claimed in any one of the preceding claims.

8. An authentication system for authenticating a digital operation (HSH, SGN) at request of a terminal (200), wherein the authentication system (150) comprises an authentication device (110) of a user and a device reader (100) for interfacing between a terminal (200) and the authentication device (110), at least one of the device reader (100) and the authentication device (110) comprising a proxy for monitoring data transmitted between the authentication device (110) and the terminal (200), wherein the data comprises the digital operation (HSH, SGN) to be confirmed, the proxy being further configured for capturing the digital operation (HSH, SGN), at least one of the device reader (100) and the authentication device (110) being provided with a user interface (108, 118) comprising the display device (106, 116) and an input device (104, 114), wherein the display device (106, 116) is configured for displaying a representative of the digital operation (HSH, SGN) to the user on the display device (106, 116), the proxy being further configured for requesting confirmation of the digital operation (HSH, SGN) from the user through the input device (104, 114), and for releasing at least part of said digital operation (HSH, SGN) with the proxy if the user has confirmed said digital operation (HSH, SGN) and for blocking at least part of said digital operation (HSH, SGN) with the proxy if the user has declined said digital operation (HSH, SGN), wherein the authentication system (150) is configured for performing the digital operation (HSH, SGN) if the user has confirmed said digital operation.

9. The authentication system as claimed in claim 8, wherein the authentication device (110) comprises the user interface (118).

10. The authentication system as claimed in claim 8, wherein the device reader (100) comprises the user interface (108).

11. The authentication system as claimed in claim 8, further comprising a further device (300) comprising the user interface (308), wherein the further device (300) is linked with the authentication device (110) and/or the reader device (100).

12. The authentication system as claimed in any one of claims 8 to 11, wherein the authentication device (110) comprises the proxy.

13. The authentication system as claimed in any one of claims 8 to 11, wherein the device reader (100) comprises the proxy.

14. The device reader (100) for use in the system as claimed in any one of claims 8 to 13.

15. The authentication device (110) for use in the system as claimed in any one of claims 8 to 13.
